(19) Europäisches Patentamt
European Patent Office
Office européen des brevets

(11) **EP 1 991 025 A1**

(12) **EUROPEAN PATENT APPLICATION**

(43) Date of publication:
**12.11.2008 Bulletin 2008/46**

(51) Int Cl.:
**H04Q 7/38** (2006.01)

(21) Application number: **08102530.6**

(22) Date of filing: **12.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.05.2007 KR 20070045112**

(71) Applicants:
• **Electronics and Telecommunications Research Institute**
  **Daejeon-city (KR)**
• **Industry-University Cooperation Foundation Hanyang University**
  **Sungdong-gu**
  **Seoul 133-791 (KR)**

(72) Inventors:
• **Kim, Won-Tae**
  **Daejeon-city (KR)**
• **Kim, Sun Ja**
  **Daejeon-city (KR)**
• **Kim, Do-Hyung**
  **Daejeon-city (KR)**
• **Lee, Hwan-Gu**
  **Daejeon-city (KR)**
• **Kim, Jae-Pyeong**
  **Daejeon-city (KR)**
• **Joe, Inwhee**
  **Seoul (KR)**

(74) Representative: **Betten & Resch**
**Patentanwälte**
**Theatinerstrasse 8**
**(Fünf Höfe)**
**80333 München (DE)**

(54) **Method and apparatus for performing power consumption based handover between hybrid networks**

(57)  Provided are a method and apparatus for performing power consumption based handover between hybrid networks. The method includes listing candidate networks based on a traffic class and terminal power consumption expected for each of the hybrid networks (S120), and selecting a network for the handover according to the traffic class and a user preference from among the listed candidate networks (S130). Accordingly, power can be saved, and simultaneously a network can be effectively selected.

FIG. 1

EP 1 991 025 A1

**Description**

CROSS-REFERENCE TO RELATED PATENT APPLICATION

This application claims the benefit of Korean Patent Application No. 10-2007-0045112, filed on May 9, 2007, in the Korean Intellectual Property Office, the disclosure of which is incorporated herein in its entirety by reference.

BACKGROUND OF THE INVENTION

1. Field of the Invention

The present invention relates to a vertical handover method, and more particularly, to a vertical handover method of selecting a network by considering power consumption of a hybrid network interface.

The present invention was supported by the Information Technology (IT) Research & Development (R&D) program of the Ministry of Information and Communication (MIC) and the Institute for Information Technology Advancement (IITA), Republic of Korea. [Project No. 2005-S-025-02, Project Title: The S/W platform Development for Mobile Devices supporting Interworking between CDMA and HPi Network].

2. Description of the Related Art

If a service area of a Base Station (BS) is changed according to the movement of a terminal, a frequency of a call channel needs to be changed, and this call channel change is called handover. Vertical handover denotes a handover between networks, such as Code Division Multiple Access (CDMA), Wireless Local Area Network (WLAN), and Wireless Broadband (WiBro), which allow connection to the Internet and provide data communication services and have different characteristics, such as Quality of Service (QoS) and billing

Thus, each terminal must have a network interface, corresponding to each network, for an access to each of the different networks. Thus, power consumption of each network interface according to network selection is an important considering factor in vertical handover.

In a method of predicting power consumption of each network interface by using packet transmission and reception information of a terminal, it is assumed that the mobility of the terminal and an order of packets transmitted and received between the terminal and a corresponding node are already known. However, this method is difficult to implement in reality.

In addition, a method of predicting power consumption of each network interface by monitoring the maximum transmission capacity of a network interface card and traffic has validity However, it is difficult to reflect a difference in power consumption between transmission and reception on a system.

SUMMARY OF THE INVENTION

The present invention provides a vertical handover method of selecting a network by using network interface power consumption information, so as to reduce power consumption of network interfaces.

According to an aspect of the present invention, there is provided a method of performing a power consumption based handover between hybrid networks, the method comprising: listing candidate networks based on a traffic class and terminal power consumption expected for each of the hybrid networks; and selecting a network for the handover according to the traffic class and a user preference from among the listed candidate networks.

Wherein the listing of candidate networks may comprise: creating a candidate network list (CNL) listing candidate networks from among the hybrid networks; calculating expected power consumption of a terminal for each candidate network based on network interface capacity of each candidate network in the CNL and a current traffic class of the terminal; calculating an expected minimum using time of the terminal for each candidate network based on the expected power consumption and current remaining battery capacity of the terminal; and updating the candidate network list according to a result obtained by comparing the expected minimum using time and a pre-set threshold.

Wherein the selecting of the networks for the handover may comprise: receiving information on comparison factors from each candidate network; generating a progression for each candidate network; calculating a weight of each of the comparison factors of each candidate network; quantifying a grade of approximation to a reference progression by applying the weight to the progression; and selecting a network having the maximum grade of approximation value as a network for the handover.

According to another aspect of the present invention, there is provided an apparatus for performing a power consumption based handover between hybrid networks, the apparatus comprising: a candidate network listing unit listing candidate networks based on a traffic class and terminal power consumption expected for each of the hybrid networks;

and a network selector selecting a network for the handover according to the traffic class and a user preference from among the listed candidate networks.

The candidate network listing unit may comprise: a candidate network list (CNL) creator creating a CNL of candidate networks from among the hybrid networks; a power consumption predictor calculating expected power consumption of a terminal for each network based on network interface capacity of each candidate network in the CNL and a current traffic class of the terminal; and a minimum using time predictor calculating an expected minimum using time of the terminal for each candidate network based on the expected power consumption and current remaining battery capacity of the terminal.

The network selector may comprise: a network information receiver receiving information on comparison factors from each candidate network; a progression generator generating a progression for each candidate network; a weight calculator calculating a weight of each of the comparison factors of each candidate network; an analyzer quantifying a grade of approximation to a reference progression by applying the weight to the progression; and a selector selecting a network having the maximum grade of approximation value as a network for the handover.

According to another aspect of the present invention, there is provided a computer readable recording medium storing a computer readable program for executing a method of performing a power consumption based handover between hybrid networks.

BRIEF DESCRIPTION OF THE DRAWINGS

The above and other features and advantages of the present invention will become more apparent by describing in detail exemplary embodiments thereof with reference to the attached drawings in which:

FIG. 1 is a flowchart of a method of selecting a network for the handover, according to an embodiment of the present invention;

FIG. 2 is a flowchart of an operation of creating a candidate networks list in the method illustrated in FIG. 1, according to an embodiment of the present invention;

FIG. 3 is a flowchart of an operation of selecting a network for the handover of the method illustrated in FIG. 1, according to an embodiment of the present invention;

FIG. 4 is a hierarchical structure of comparison factors considered to select a network for the handover, according to an embodiment of the present invention;

FIG. 5 is a block diagram of a handover apparatus according to an embodiment of the present invention;

FIG. 6 is a functional block diagram of a candidate network listing unit illustrated in FIG. 5, according to an embodiment of the present invention; and

FIG. 7 is a functional block diagram of a network selector illustrated in FIG. 5, according to an embodiment of the present invention.

DETAILED DESCRIPTION OF THE INVENTION

The present invention will be described in detail by explaining embodiments of the invention with reference to the attached drawings. Like reference numbers are used to refer to like elements through at the drawings. In the following description, well-known functions or constructions are not described in detail since they would obscure the invention with unnecessary detail.

A traffic class used in the specification is classified as a conversational class, an up streaming class, a down streaming class, an interactive class, and a background class, which are based on 4 traffic classes of 3rd Generation Partnership Project (3GPP) by specifying 4 traffic classes. That is, a streaming class of the 4 traffic classes is specified to the up streaming class and the down streaming class. Each traffic class has a different mean traffic load and a different usage ratio for transmission, reception, and idle periods.

Table 1 shows basic features and services of the 4 traffic classes in accordance with the 3GPP.

[Table 1] Traffic classes of the 3GPP

| Traffic class | Conversational class | Streaming class | Interactive class | Background class |
|---|---|---|---|---|
| Basic features | Maintain time difference | Maintain time difference | Request/response pattern, preserve contents | Cannot predict arrival time, preserve contents |
| Application service | Voice service | Streaming video | Web browsing | E-mail reception |

The present invention relates to a method of selecting a network for the handover by predicting power consumption of a terminal according to a traffic class and considering the expected terminal power consumption and user preference information. Since power consumption in each of the transmission, reception, and idle modes of a network interface is different, using this feature can be helpful to a handover considering power consumption.

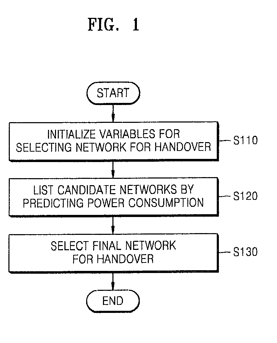

FIG. 1 is a flowchart of a method of selecting a network for the handover, according to an embodiment of the present invention.

Referring to FIG. 1, variables, which are required to execute the method of selecting a network for the handover, are initialized in operation S110.

In operation S120, a candidate network list (CNL) is created to list candidate networks for the handover based on a traffic class and terminal power consumption for each of a plurality of networks, using the initialized variables.

In operation S130, a network for the handover is selected from among the candidate networks of the CNL by using information on each candidate network in the CNL, the traffic class, and a user preference.

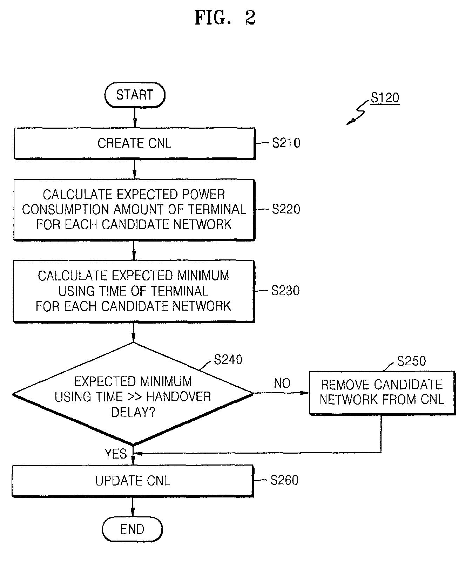

FIG. 2 is a flowchart of the candidate networks list creation operation (S120) illustrated in FIG. 1, according to an embodiment of the present invention.

In the candidate networks list creation operation (S120), an expected minimum using time is calculated by using the traffic class and the terminal power consumption, and the CNL is determined by comparing the expected minimum using time and a handover delay to each of the networks.

Referring to FIG. 2, a CNL is created by listing available networks from among a plurality of hybrid networks in operation S210.

In operation S220, a network interface capacity (NIC) of each network contained in the CNL and a current traffic class of the terminal are determined, and an expected power consumption amount of the terminal for each network contained in the CNL is calculated based on the NIC and the current traffic class of the terminal, (refer to Equation 3).

In operation S230, an expected minimum using time of the terminal for each network contained in the CNL is calculated based on the expected power consumption amount of the terminal and current remaining battery capacity information of the terminal (refer to Equation 4).

In operation S240, the expected minimum using time of the terminal for each network contained in the CNL is compared to a pre-set threshold.

If the expected minimum using time of the terminal for each network contained in the CNL is not greater than the pre-set threshold, the corresponding network is removed from the CNL in operation S250. The pre-set threshold corresponds to several times a handover delay of each of the networks and can vary according to a type and characteristic of each of the networks. Thus, if the expected minimum using time of the terminal for each network contained in the CNL is sufficiently greater than the handover delay of each of the networks, the corresponding network can be a candidate network of the CNL, otherwise the corresponding network is removed from the CNL.

In operation S260, a final CNL is determined by updating the CNL by performing operations 210 to 250 for all networks in the CNL.

Table 2 shows variables used to perform the candidate networks list creation operation (S120).

[Table 2]

| Name | Description |
|---|---|
| $P^*_{tx}(i)$ | Transmission (tx) power consumption amount of NIC of $i^{th}$ network |
| $P^*_{rx}(i)$ | Reception (rx) power consumption amount of NIC of $i^{th}$ network |
| $P^*_{idle}(i)$ | Idle power consumption amount of NIC of $i^{th}$ network |
| $P_{tx}(i,j)$ | Tx power consumption amount in $i^{th}$ network and $j^{th}$ traffic class |
| $P_{rx}(i,j)$ | Rx power consumption amount in $i^{th}$ network and $j^{th}$ traffic class |
| $P_{expect}(i,j)$ | Expected power consumption amount in $i^{th}$ network and $j^{th}$ traffic class |
| $R_{up}(i)$ | Up link maximum tx rate of $i^{th}$ network |
| $R_{down}(i)$ | Down link maximum tx rate of $i^{th}$ network |
| $\rho(j)$ | Traffic load of $j^{th}$ traffic class |
| $\gamma_{tx}(j), \gamma_{rx}(j)$ | Tx/rx mode using time ratio of $j^{th}$ traffic class |
| $E_{battery}$ | Remaining battery capacity of terminal |
| $T_{HO}(i)$ | Handover delay to $i^{th}$ network |

(continued)

| Name | Description |
|------|-------------|
| $T_{expect}(i,j)$ | Expected using time of $i^{th}$ network and $j^{th}$ traffic class |

Equations 1 to 4 are used to calculate an expected minimum using time for each network contained in the CNL.

$$P_{tx}(i,j) = \frac{\rho(j)}{R_{up}(i)} \cdot P_{tx}^{*}(i) + \left(1 - \frac{\rho(j)}{R_{up}(i)}\right) \cdot P_{idle}^{*}(i) \qquad \text{(Equation 1)}$$

$$P_{rx}(i,j) = \frac{\rho(j)}{R_{down}(i)} \cdot P_{rx}^{*}(i) + \left(1 - \frac{\rho(j)}{R_{down}(i)}\right) \cdot P_{idle}^{*}(i) \qquad \text{(Equation 2)}$$

$$P_{\exp ect}(i,j) = P_{tx}(i,j) \cdot \gamma_{tx}(j) + P_{rx}(i,j) \cdot \gamma_{rx}(j) \qquad \text{(Equation 3)}$$

$$T_{\exp ect}(i,j) = \frac{E_{battery}}{P_{\exp ect}(i,j)} \qquad \text{(Equation 4)}$$

$R_{up}(i)$, $R_{down}(i)$, $\rho(j)$, $\gamma_{tx}(j)$, and $\gamma_{rx}(j)$ in Equations 1 to 3 use Tables 3 and 4.

[Table 3] access capacity of each network

| Network (i) | Maximum tx rate (Kbps) |
|-------------|------------------------|
| CDMA (0) | 144/2400 (up/down) |
| WiBro (1) | 1000/3000 |
| WLAN (2) | 11000 |

[Table 4] mean traffic load and tx/rx ratio according to traffic class

| Traffic class (j) | Mean traffic load (Kbps) | $\gamma_{tx}$ | $\gamma_{rx}$ |
|-------------------|--------------------------|---------------|---------------|
| Conversational (0) | 64 | 0.5 | 0.5 |
| Up_Streaming (1) | 300 | 0.9 | 0.1 |
| Down_Streaming (2) | 300 | 0.1 | 0.9 |
| Interactive (3) | 100 | 0.5 | 0.5 |
| Background (4) | 100 | 0 | 1 |

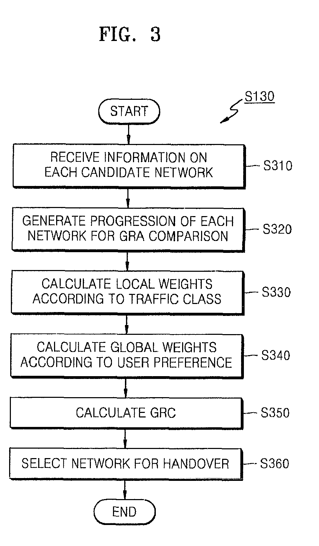

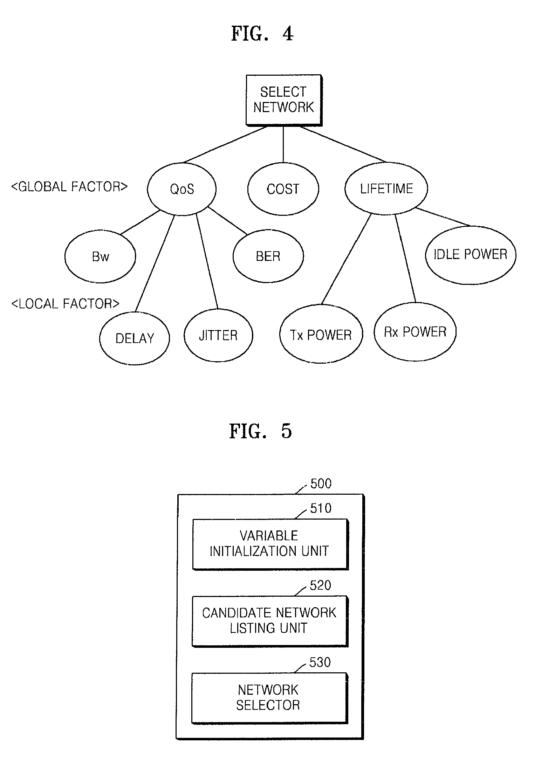

FIG. 3 is a flowchart of the network for the handover selection operation (S130) illustrated in FIG. 1, according to an embodiment of the present invention, and FIG. 4 is a hierarchical structure of comparison factors considered to select a network for the handover, according to an embodiment of the present invention

In the network for the handover selection operation (S130), when a plurality of comparison factors between candidate networks exist, a network for the handover is selected by reasonably comparing the comparison factors.

Referring to FIG. 4, the comparison factors considered in the current embodiment include global factors indicating network information and local factors of each global factor.

The global factors include Quality of Service (QoS), cost, and lifetime. QoS is determined by local factors, such as bandwidth (BW), delay, jitter, and Bit Error Rate (BER), cost is determined by itself, and lifetime is determined by local factors, such as tx power, rx power, and idle power.

Thus, in order to determine one network from among a plurality of hybrid networks, such as CDMA, WiBro, and WLAN, final comparison factors, i.e., a total of 8 pieces of network information (data), such as BW, delay, jitter, BER, cost, tx power, rx power, and idle power, are used.

In the present invention, an Analytic Hierarchical Process (AHP) is used as a method of applying a weight to each comparison factor, and Grey Relation Analysis (GRA) is used to compare a plurality of factors to each other. Although a network comparison method using the AHP and the GRA is used in the prior art, the network comparison method considers only QoS. However, in the present invention, network information, such as QoS, cost, and lifetime, is synthetically considered as described above.

Referring to FIG. 3, in operation S310, comparison factors, i.e., network information of global factors, such as QoS, cost, and lifetime, and local factors considered in each global factor, are received from each candidate network contained in the received final CNL.

In operation S320, a progression of each candidate network is generated for GRA comparison. The progression for GRA comparison indicates an arrangement or vector of information on each candidate network, e.g., CDMA, WiBro, or WLAN, and can have a structure described below.

|BW| |Delay| |Jitter| |BER| |Cost| |Tx Power |Rx Power |Idle Power |

Weights of the comparison factors of the candidate network are calculated. That is, local weights applied to local comparison factors according to the traffic class of the terminal are calculated in operation S330, and global weights applied to global comparison factors according to the user preference are calculated in operation S340. The user preference is determined according to a grade defined by a user with respect to the global factors, such as QoS, cost, and lifetime.

Tables 5 and 6 respectively show global weights according to user preference and local weights according to traffic class.

[Table 5] global weights according to user preference

| User preference | $W_{QoS}$ | $W_{cost}$ | $W_{lifetime}$ |
|---|---|---|---|
| QoS | 0.8 | 0.1 | 0.1 |
| Cost | 0.1 | 0.8 | 0.1 |
| Lifetime | 0.1 | 0.1 | 0.8 |

[Table 6] local weights according to traffic class

| Traffic class | $W_{BW}$ | $W_{delay}$ | $W_{jitter}$ | $W_{BER}$ | $W_{Tx}$ | $W_{Rx}$ | $W_{idle}$ |
|---|---|---|---|---|---|---|---|
| Conversational | 0.05 | 0.45 | 0.45 | 0.05 | 0.47 | 0.47 | 0.05 |
| Up Streaming | 0.42 | 0.11 | 0.42 | 0.04 | 0.9 | 0.1 | 0 |
| Down Streaming | 0.42 | 0.11 | 0.42 | 0.04 | 0.1 | 0.9 | 0 |
| Interactive | 0.16 | 0.16 | 0.04 | 0.64 | 0.17 | 0.17 | 0.67 |
| Background | 0.22 | 0.06 | 0.06 | 0.67 | 0 | 0.1 | 0.9 |

Referring to Table 5, different weights are applied to the global factors, i.e., QoS, cost, and lifetime, according to the user preference. For example, if the user prefers QoS the most, by applying a relatively greater weight (0.8) to QoS in comparison to the other factors, the possibility of selecting a candidate network having higher values of the local factors i.e., BW, delay, jitter, and BER, of QoS can be increased.

Referring to Table 6, local factors are applied so that QoS and lifetime are different according to a traffic class. This is because, according to a traffic class, a consideration grade of BW, delay, jitter, and BER varies, and a usage ratio for tx/rx/idle also varies according to the traffic class. For example, in the case of the conversational class, delay and jitter are more important factors than BW and BER, and tx and rx have the same ratio that is much greater than that of an idle period, and thus, weights can be applied considering tx and rx.

A final weight of each comparison factor is calculated by multiplying a corresponding local weight by a corresponding global weight, the final weight of each comparison factor is applied to the progression generated in operation S320, and a Grey Relation Coefficient (GRC) is calculated in order to quantify a grade of approximation between each network progression and a reference progression (or an ideal progression), in operation S350.

A network having the greatest GRC is selected from among the candidate networks in the CNL as a final network for the handover, in operation S360.

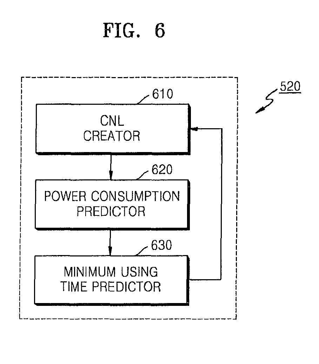

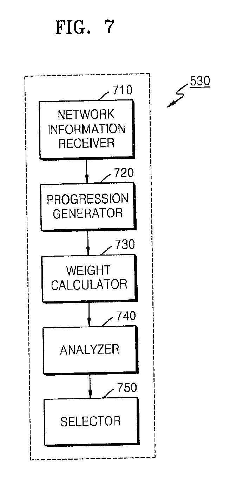

FIG. 5 is a block diagram of a handover apparatus 500 according to an embodiment of the present invention. FIG. 6 is a functional block diagram of a candidate network listing unit 520 illustrated in FIG. 5, according to an embodiment of the present invention. FIG. 7 is a functional block diagram of a network selector 530 illustrated in FIG. 5, according to an embodiment of the present invention.

Referring to FIG. 5, the handover apparatus 500 according to an embodiment of the present invention includes a variable initialization unit 510, the candidate network listing unit 520, and the network selector 530.

The variable initialization unit 510 executes algorithms of performing a network selection for the handover and initializes variables required for calculation.

The candidate network listing unit 520 creates a CNL by listing candidate networks based on a traffic class and terminal power consumption amount expected for each of a plurality of hybrid networks, using initialized variables.

Referring to FIG. 6, the candidate network listing unit 520 includes a CNL creator 610, a power consumption predictor 620, and a minimum using time predictor 630.

The CNL creator 610 creates a CNL containing the candidate networks from among the hybrid networks, the power consumption predictor 620 calculates an expected power consumption amount of a terminal for each candidate network based on interface capacity of each candidate network in the CNL and a current traffic class of the terminal, and the minimum using time predictor 630 calculates an expected minimum using time of the terminal for each candidate network based on the expected power consumption amount and current remaining battery capacity of the terminal.

The prediction of power consumption amount and minimum using time can be determined from Equations 1 to 4 described above.

The CNL creator 610 determines a final CNL by updating the CNL according to a result obtained by comparing the expected minimum using time and a pre-set threshold. The CNL is updated by maintaining a corresponding network as a candidate network if the expected minimum using time is sufficiently greater than the threshold, or otherwise removing the corresponding network from the CNL if the expected minimum using time is less than the threshold The threshold is set based on a handover delay, i.e., corresponds to several times a handover delay of each network, and can vary according to a type and characteristic of each network. Thus, if the expected minimum using time is sufficiently greater than the threshold, the corresponding network is maintained as a candidate network, otherwise the corresponding network is removed from the CNL.

Referring back to FIG. 5, the network selector 530 selects a network for the handover according to network information of each candidate network contained in the updated CNL, a traffic class, and a user preference.

Referring to FIG. 7, the network selector 530 includes a network information receiver 710, a progression generator 720, a weight calculator 730, an analyzer 740, and a selector 750.

The network information receiver 710 receives network information of comparison factors, i.e., global factors, such as QoS. Cost, and lifetime, and local factors considered in each global factor, of each candidate network contained in the updated CNL.

The progression generator 720 generates a progression for each candidate network for GRA comparison.

The weight calculator 730 calculates a weight of each of the comparison factors of each candidate network. Local weights applied to local comparison factors according to a traffic class of the terminal are calculated, and global weights applied to global comparison factors according to a user preference are calculated. The user preference is determined according to a grade defined by the user with respect to the global factors, such as QoS, cost, and lifetime.

The analyzer 740 quantifies by analyzing and calculating a grade of approximation between each network progression and the reference progression using GRA by applying a final weight obtained by multiplying the local weights and the global weights to the progression. The calculated result is represented with a GRC.

The selector 750 selects a network having the maximum GRC as a network for the handover.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet) The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

As described above, according to the present invention, a network for the handover is selected by creating a CNL based on expected power consumption calculated according to each network and a traffic class and applying a different weight to each network comparison factor according to a user preference and a traffic class of each network contained in the CNL. Thus, unnecessary handover can be prevented, and a network for the handover can be effectively selected.

A network selection is considered by predicting power consumption, and furthermore, if a user prefers lifetime among comparison factors, handover is performed by selecting a network, having less power consumption, according to a traffic class and network interface information, and thus, power can be saved.

While this invention has been particularly shown and described with reference to preferred embodiments thereof, it will be understood by one skilled in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

**Claims**

1.    A method of performing a power consumption based handover between hybrid networks, the method comprising:

(a) listing candidate networks based on a traffic class and terminal power consumption expected for each of the hybrid networks; and
(b) selecting a network for the handover according to the traffic class and a user preference from among the listed candidate networks.

2.    The method of claim 1, wherein (a) comprises:

(a1) creating a candidate network list (CNL) listing candidate networks from among the hybrid networks;
(a2) calculating expected power consumption of a terminal for each candidate network based on network interface capacity of each candidate network in the CNL and a current traffic class of the terminal;
(a3) calculating an expected minimum using time of the terminal for each candidate network based on the expected power consumption and current remaining battery capacity of the terminal; and
(a4) updating the CNL according to a result obtained by comparing the expected minimum using time and a pre-set threshold.

3.    The method of claim 2, wherein (a4) comprises if the expected minimum using time is not greater than the threshold, updating the CNL by removing a corresponding network from the CNL.

4.    The method of claim 2 or 3, wherein the threshold is set based on a network handover delay value.

5.    The method of one of claims 1 to 4, wherein (b) comprises:

(b1) receiving information on comparison factors from each candidate network;
(b2) generating a progression for each candidate network;
(b3) calculating a weight of each of the comparison factors of each candidate network;
(b4) quantifying a grade of approximation to a reference progression by applying the weight to the progression; and
(b5) selecting a network having the maximum grade of approximation value as a network for the handover.

6.    The method of claim 5, wherein the comparison factors comprise global factors, which comprise Quality of Service (QoS), cost, and lifetime, local factors related to the QoS, which comprise bandwidth (BW), delay, jitter, and Bit Error Rate (BER), and local factors related to the lifetime, which comprise transmission (tx) power, reception (rx) power, and idle power.

7.    The method of claim 6, wherein (b3) comprises calculating global weights, which are weights of the global factors with respect to a user preference, and local weights, which are weights of the local factors with respect to a traffic class of the terminal.

8.    The method of one of claims 1 to 7, further comprising, before (a), initializing variables required to perform the method.

9.    An apparatus for performing a power consumption based handover between hybrid networks, the apparatus comprising:

a candidate network listing unit listing candidate networks based on a traffic class and terminal power consumption expected for each of the hybrid networks; and
a network selector selecting a network for the handover according to the traffic class and a user preference from among the listed candidate networks.

10. The apparatus of claim 9, wherein the candidate network listing unit comprises:

a candidate network list (CNL) creator creating a CNL of candidate networks from among the hybrid networks;
a power consumption predictor calculating expected power consumption of a terminal for each network based on network interface capacity of each candidate network in the CNL and a current traffic class of the terminal; and
a minimum using time predictor calculating an expected minimum using time of the terminal for each candidate network based on the expected power consumption and current remaining battery capacity of the terminal, and the CNL creator updates the CNL according to a result obtained by comparing the expected minimum using time and a pre-set threshold.

11. The apparatus of claim 10, wherein the CNL creator updates the CNL by removing a corresponding network from the CNL if the expected minimum using time is not greater than the threshold.

12. The apparatus of claim 10 or 11, wherein the threshold is set based on a network handover delay value.

13. The apparatus of one of claims 9 to 12, wherein the network selector comprises:

a network information receiver receiving information on comparison factors from each candidate network;
a progression generator generating a progression for each candidate network;
a weight calculator calculating a weight of each of the comparison factors of each candidate network;
an analyzer quantifying a grade of approximation to a reference progression by applying the weight to the progression; and
a selector selecting a network having the maximum grade of approximation value as a network for the handover.

14. The apparatus of claim 13, wherein the comparison factors comprise global factors, which comprise Quality of Service (QoS), cost, and lifetime, local factors related to the QoS, which comprise bandwidth (BW), delay, jitter, and Bit Error Rate (BER), and local factors related to the lifetime, which comprise transmission (tx) power, reception (rx) power, and idle power.

15. The apparatus of claim 14, wherein the weight calculator calculates global weights, which are weights of the global factors with respect to a user preference, and local weights, which are weights of the local factors with respect to a traffic class of the terminal.

16. The apparatus of one of claims 9 to 15, further comprising a variable initialization unit initializing variables to perform the method.

FIG. 1

```
                ┌─────────────┐
                │    START    │
                └─────────────┘
                       │
          ┌────────────────────────────┐
          │   INITIALIZE VARIABLES FOR  │── S110
          │ SELECTING NETWORK FOR HANDOVER │
          └────────────────────────────┘
                       │
          ┌────────────────────────────┐
          │    LIST CANDIDATE NETWORKS BY │── S120
          │  PREDICTING POWER CONSUMPTION │
          └────────────────────────────┘
                       │
          ┌────────────────────────────┐
          │     SELECT FINAL NETWORK     │── S130
          │        FOR HANDOVER          │
          └────────────────────────────┘
                       │
                ┌─────────────┐
                │     END     │
                └─────────────┘
```

FIG. 2

```
          ( START )
              │
              ▼
┌─────────────────────────────┐
│        CREATE CNL           │── S210
└─────────────────────────────┘
              │
              ▼
┌─────────────────────────────┐
│  CALCULATE EXPECTED POWER   │
│ CONSUMPTION AMOUNT OF TERMINAL │── S220
│   FOR EACH CANDIDATE NETWORK │
└─────────────────────────────┘
              │
              ▼
┌─────────────────────────────┐
│   CALCULATE EXPECTED MINIMUM │
│      USING TIME OF TERMINAL  │── S230
│   FOR EACH CANDIDATE NETWORK │
└─────────────────────────────┘
              │
              ▼
          ╱ S240 ╲
       ╱             ╲
     ╱  EXPECTED MINIMUM ╲        NO    ┌──────────────────┐ S250
    ╱ USING TIME >> HANDOVER ╲─────────→│ REMOVE CANDIDATE │
     ╲      DELAY?          ╱           │ NETWORK FROM CNL │
       ╲                 ╱             └──────────────────┘
          ╲  YES  ╱                              │
              │ ◄─────────────────────────────────┘
              ▼
┌─────────────────────────────┐
│        UPDATE CNL           │── S260
└─────────────────────────────┘
              │
              ▼
           ( END )
```

S120

## FIG. 3

S130

START

RECEIVE INFORMATION ON
EACH CANDIDATE NETWORK — S310

GENERATE PROGRESSION OF EACH
NETWORK FOR GRA COMPARISON — S320

CALCULATE LOCAL WEIGHTS
ACCORDING TO TRAFFIC CLASS — S330

CALCULATE GLOBAL WEIGHTS
ACCORDING TO USER PREFERENCE — S340

CALCULATE GRC — S350

SELECT NETWORK FOR HANDOVER — S360

END

## FIG. 4

```
                    ┌──────────┐
                    │  SELECT  │
                    │ NETWORK  │
                    └──────────┘
                   /      |      \
<GLOBAL FACTOR>  (QoS)  (COST)  (LIFETIME)
                /  |  \          /   |    \
             (Bw) (BER)    (Tx POWER)(Rx POWER)(IDLE POWER)
<LOCAL FACTOR>
          (DELAY)(JITTER)
```

## FIG. 5

```
┌─────────────────────────────────┐ 500
│  ┌───────────────────────────┐  │ 510
│  │       VARIABLE            │  │
│  │  INITIALIZATION UNIT      │  │
│  └───────────────────────────┘  │
│  ┌───────────────────────────┐  │ 520
│  │   CANDIDATE NETWORK       │  │
│  │     LISTING UNIT          │  │
│  └───────────────────────────┘  │
│  ┌───────────────────────────┐  │ 530
│  │        NETWORK            │  │
│  │        SELECTOR           │  │
│  └───────────────────────────┘  │
└─────────────────────────────────┘
```

FIG. 6

520

610
CNL
CREATOR

620
POWER CONSUMPTION
PREDICTOR

630
MINIMUM USING
TIME PREDICTOR

FIG. 7

**European Patent Office**

## EUROPEAN SEARCH REPORT

Application Number

EP 08 10 2530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASSWA A ET AL: "Generic vertical handoff decision function for heterogeneous wireless networks" WIRELESS AND OPTICAL COMMUNICATIONS NETWORKS, 2005. WOCN 2005. SECOND IFIP INTERNATIONAL CONFERENCE ON DUBAI, UNITED ARAB EMIRATES UAE MARCH 6 - 8, 2005, PISCATAWAY, NJ, USA,IEEE, 6 March 2005 (2005-03-06), pages 239-243, XP010801891 ISBN: 978-0-7803-9019-5 | 1-3,5, 8-11,13, 16 | INV. H04Q7/38 |
| A | * abstract * <br><br> * page 239, right-hand column * * page 240, left-hand column - page 242, left-hand column * | 4,6,7, 12,14,15 | |
| X | QADEER W. SIMUNIC T.: "Heterogeneous wireless network management" PACS '03, [Online] 1 December 2003 (2003-12-01), pages 1-8, XP002492755 San Diego Retrieved from the Internet: URL:http://www.cse.ucsd.edu/~trosing/paper s/PACS03.pdf> [retrieved on 2008-08-20] | 1-3,5, 8-11,13, 16 | TECHNICAL FIELDS SEARCHED (IPC) <br><br> H04Q |
| A | * abstract * <br><br> * page 2, right-hand column * * page 4, left-hand column - page 5, right-hand column * | 4,6,7, 12,14,15 | |
| | -/-- | | |

The present search report has been drawn up for all claims

| Place of search | Date of completion of the search | Examiner |
|---|---|---|
| Munich | 20 August 2008 | Matt, Stefan |

EPO FORM 1503 03.82 (P04C01)

**European Patent Office**

# EUROPEAN SEARCH REPORT

Application Number

EP 08 10 2530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BO XING ET AL: "Multi-Constraint Dynamic Access Selection in Always Best Connected Networks" MOBILE AND UBIQUITOUS SYSTEMS: NETWORKING AND SERVICES, 2005. MOBIQUIT OUS 2005. THE SECOND ANNUAL INTERNATIONAL CONFERENCE ON SAN DIEGO, CA, USA 17-21 JULY 2005, PISCATAWAY, NJ, USA,IEEE, 17 July 2005 (2005-07-17), pages 56-64, XP010853984 ISBN: 978-0-7695-2375-0 | 1-3,5, 8-11,13, 16 | |
| A | * abstract * <br><br> * page 56, left-hand column - page 58, left-hand column * | 4,6,7, 12,14,15 | |
| | ----- | | |
| X | HUI-LING JIA ET AL: "A power threshold based policy for vertical handoff in heterogeneous networks" WIRELESS COMMUNICATIONS, NETWORKING AND MOBILE COMPUTING, 2005. PROCEE DINGS. 2005 INTERNATIONAL CONFERENCE ON WUHAN, CHINA SEPT. 23-26, 2005, PISCATAWAY, NJ, USA,IEEE, vol. 2, 23 September 2005 (2005-09-23), pages 1052-1055, XP010856329 | 1-3,5, 8-11,13, 16 | TECHNICAL FIELDS SEARCHED (IPC) |
| A | * abstract * <br><br> * page 1052, left-hand column - page 1054, left-hand column, line 9 * | 4,6,7, 12,14,15 | |
| | ----- | | |
| | -/-- | | |

The present search report has been drawn up for all claims

| Place of search | Date of completion of the search | Examiner |
|---|---|---|
| Munich | 20 August 2008 | Matt, Stefan |

EPO FORM 1503 03.82 (P04C01)

**European Patent Office**

## EUROPEAN SEARCH REPORT

Application Number

EP 08 10 2530

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| T | INWHEE JOE ET AL: "A Network Selection Algorithm considering Power Consumption in Hybrid Wireless Networks" COMPUTER COMMUNICATIONS AND NETWORKS, 2007. ICCCN 2007. PROCEEDINGS OF 16TH INTERNATIONAL CONFERENCE ON, IEEE, PI, 1 August 2007 (2007-08-01), pages 1240-1243, XP031137035 ISBN: 978-1-4244-1250-1 * the whole document * ----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 20 August 2008 | Matt, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070045112

- KR 2005S02502